# EUROPÄISCHE PATENTSCHRIFT

(11) **EP 3 549 328 B1**
(45) Veröffentlichungstag und Bekanntmachung des Hinweises auf die Patenterteilung: **05.01.2022**
(21) Anmeldenummer: 17811229.8
(22) Anmeldetag: 23.11.2017
(51) Int. Cl.: H04L 29/08, H04L 29/06

(54) **HAUSHALTSGERÄT MIT NETZWERKSCHNITTSTELLE**
HOUSEHOLD APPLIANCE HAVING A NETWORK INTERFACE
APPAREIL ÉLECTROMÉNAGER À INTERFACE RÉSEAU

(30) Priorität: 01.12.2016 DE 102016223950
(43) Veröffentlichungstag der Anmeldung: 09.10.2019
(73) Patentinhaber: BSH Hausgeräte GmbH, 81739 München (DE)
(72) Erfinder: KITTAN, Jens, 16727 Oberkraemer (DE); CABALEIRO MARTINS, Marcelo, 13629 Berlin (DE); NEITZEL, Thomas, 10785 Berlin (DE)
(86) Internationale Anmeldenummer: PCT/EP2017/080201
(87) Internationale Veröffentlichungsnummer: WO 2018/099796

(56) Entgegenhaltungen:
- DE-A1-102012 200 714
- US-A1- 2006 168 178
- US-A1- 2012 079 119

## Beschreibung

Die Erfindung betrifft ein Haushaltsgerät, aufweisend mindestens ein elektrisch ansteuerbares Funktionselement und mindestens eine Netzwerkschnittstelle zum Übertragen von Daten über ein Netzwerk. Die Erfindung betrifft auch eine Datenverarbeitungseinrichtung, die dazu eingerichtet ist, über ein Netzwerk mit einem Haushaltsgerät verbunden zu werden. Die Erfindung betrifft ferner ein System mit einem solchen Haushaltsgerät und einer solchen Datenverarbeitungseinrichtung. Die Erfindung betrifft außerdem ein Verfahren zum Betreiben eines Haushaltsgeräts.

WO 2004/055256 A1 offenbart ein Verfahren zum häuslichen Verwalten von Textilartikeln, umfassend die Schritte: a) Bereitstellen eines Aufnahmeraums innerhalb eines Wohnhauses mit einem nicht-sequentiellen Sensor, der dazu konfiguriert ist, mehrere Textilartikel zu identifizieren, die gleichzeitig in das Aufnahmeraum gelegt worden sind; b) Identifizieren mehrerer Textilartikel, die sich in dem Aufnahmeraum befinden, mit dem nicht-sequentiellen Sensor, wobei jeder Textilartikel mit einer Kennung versehen ist, wobei der nicht-sequentielle Sensor dazu konfiguriert ist, die Kennung, welche Artikelparameter bereithält, auszulesen; c) Zusammenstellen einer Artikelliste, wobei die Liste die so identifizierten Textilartikel und die Artikelparameter umfasst; d) bei Bedarf Abrufen der Artikelparameter aus der Artikelliste, wobei mindestens ein Aufnahmeraum Behandlungsmittel zum Behandeln der in dem Aufnahmeraum angeordneten Textilartikel umfasst.

DE 10 2012 200 714 A1 offenbart ein Verfahren zur Datenkommunikation zwischen einem Haushaltsgerät einerseits und einem Benutzerendgerät eines Benutzers des Haushaltsgeräts andererseits, wobei im Rahmen der Datenkommunikation Steuerdaten mit Steuerbefehlen an das Haushaltsgerät übertragen werden und/oder Statusdaten mit Informationen über einen aktuellen Zustand des Haushaltsgeräts von dem Haushaltsgerät an das Benutzerendgerät übertragen werden, wobei über einen Internet-Server die Datenkommunikation zwischen dem Haushaltsgerät und dem Benutzerendgerät zumindest abschnittsweise über das Internet durchgeführt wird.

Es ist die **Aufgabe** der vorliegenden Erfindung, die Nachteile des Standes der Technik zumindest teilweise zu überwinden und insbesondere eine verbesserte Möglichkeit zum Betreiben eines Haushaltsgeräts bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Haushaltsgerät, aufweisend mindestens ein elektrisch ansteuerbares Funktionselement, mindestens eine Netzwerkschnittstelle zum Übertragen von Daten über ein Netzwerk und eine Schnittstelle (im Folgenden ohne Beschränkung der Allgemeinheit als "Umsetzungsschnittstelle" bezeichnet) zwischen dem einen Funktionselement und der Netzwerkschnittstelle zum Umsetzen von über die Netzwerkschnittstelle empfangenem Code in ausführbare Instruktionen für das mindestens eine Funktionselement.

Von dem Haushaltsgerät empfangener Code (d.h., eine Sequenz von Anweisungen oder Befehlen) wird durch die Umsetzungsschnittstelle in die Instruktion(en) umgesetzt, die von dem mindestens einen Funktionselement direkt ausführbar sind bzw. ausgeführt werden. Dadurch kann vorteilhafterweise das mindestens eine Funktionselement über das Netzwerk direkt angesteuert werden, insbesondere von außerhalb des betreffenden Haushalts. Es wird so darauf verzichtet, zum Ablaufenlassen eines Betriebsprogramms - insbesondere eines vollständigen Betriebsprogramms - empfangenen Code erst persistent in dem Haushaltsgerät zu speichern. Es ist folglich eine Weiterbildung, dass das Haushaltsgerät keinen Speicher zum persistenten Speichern des empfangenen Codes aufweist. Dies kann insbesondere auch so ausgedrückt werden, dass zumindest einige Betriebsprogramme eines Haushaltsgeräts nicht in dem Haushaltsgerät installiert sind, sondern auf einem anderen Rechner oder Rechnerverbund, der aus der Ferne (bspw. über das Internet) aufgerufen wird, ausgeführt werden. Dies kann auch als "Cloud Computing" bezeichnet werden.

Es ist jedoch nicht ausgeschlossen, dass z.B. ab Werk mindestens ein, insbesondere einfaches Betriebsprogramm ("Grundprogramm") persistent in dem Haushaltsgerät gespeichert ist, z.B. für den Fall, dass kein Internet zur Verfügung steht. Es ist jedoch eine Weiterbildung, dass keinerlei Betriebsprogramm in dem Haushaltsgerät persistent gespeichert ist.

Die Instruktionen können beispielsweise Maschinencode oder elektrische Ansteuersignale sein.

Dadurch wiederum lässt sich der Bedarf an einem Herunterladen oder Downloaden von Software auf das Haushaltsgerät für beispielsweise ein Update, Upgrade o.ä. stark reduzieren, ggf. sogar ganz vermeiden.

Zudem kann eine Prozessor- und Speicherkapazität des Haushaltsgeräts gering gehalten werden, da dessen Betriebs- (z.B. Wasch-, Gar-, Spül- usw.) "Intelligenz" außerhalb des Geräts vorgehalten wird. Dies wiederum wirkt sich positiv auf Entwicklungszeit und Kosten aus.

Das Haushaltsgerät kann ein Wäschebehandlungsgerät sein, z.B. eine Waschmaschine, ein Wäschetrockner oder ein Waschtrockner. Das mindestens eine Funktionselement kann eine Laugenheizung, ein Türöffner, eine Prozessluftheizung, ein Gebläse, eine Wärmepumpe, ein Antriebsmotor, eine Pumpe, eine Lampe, ein Summer, ein Ventil usw. sein.

Das Haushaltsgerät kann ein Gargerät sein, z.B. aufweisend einen Backofen, einen Mikrowellenofen, ein Dampfgargerät, ein Kochfeld oder eine Kombination daraus, z.B. ein Herd, ggf. mit einer Dampfgarfunktion und/oder einer Mikrowellenfunktion. Das mindestens eine Funktionselement kann ein Heizelement, ein Dampferzeuger, ein Magnetron, ein Umlüfter, ein Wrasenlüfter, eine Lampe, ein Summer, ein Ventil usw. sein.

Das Haushaltsgerät kann ein Kühlgerät sein, z.B. aufweisend einen Kühlschrank, eine Gefriertruhe oder eine Kombination daraus. Das mindestens eine Funktionselement kann eine Wärmepumpe, eine Lampe, ein Ventil usw. sein.

Das Haushaltsgerät kann ein Haushaltskleingerät sein, z.B. eine Kaffeemaschine, ein Toaster usw. Das mindestens eine Funktionselement kann ein Heizelement, eine Lampe usw. sein.

Die mindestens eine Netzwerkschnittstelle dient zum Übertragen von Daten über ein Netzwerk. Sie kann eine drahtlose und/oder eine drahtgebundene Netzwerkschnittstelle sein. Die drahtlose Netzwerkschnittstelle kann eine Funkschnittstelle sein, z.B. ein WLAN-Modul, ein Bluetooth-Modul usw. Die drahtgebundene Netzwerkschnittstelle kann eine Ethernet-Schnittstelle usw. sein. Die Netzwerkschnittstelle kann über das Netzwerk empfangene Daten in Daten umwandeln, insbesondere umformatieren, die über geräteinterne Datenleitungen, z.B. einen Datenbus, transportierbar sind, um umgekehrt.

Das Netzwerk kann eine Verbindung des Haushaltsgeräts mit einer außerhäusigen (d.h. mit einer sich außerhalb einer häuslichen Umgebung befindlichen) Institution oder Datenverarbeitungseinrichtung herstellen. Das Netzwerk kann das Internet sein. Die Datenverarbeitungseinrichtung kann auch als "Rechner" bezeichnet werden.

Die Umsetzungsschnittstelle kann ein Parser sein oder eine Parsing-Funktion aufweisen, um den über die Netzwerkschnittstelle empfangenem Code in die ausführbaren Instruktionen umzuwandeln, oder umgekehrt. Die Umsetzungsschnittstelle kann eine Hardwareabstraktionsschicht (englisch "Hardware Abstraction Layer", HAL) aufweisen oder sein. Folglich kann die Umsetzungsschnittstelle die Funktion einer Hardwareabstraktionsschicht umfassen bzw. als eine Hardwareabstraktionsschicht dienen. Alternativ kann eine Hardwareabstraktionsschicht zwischen der Umsetzungsschnittstelle und dem mindestens einen Funktionselement vorhanden sein.

Die Umsetzungsschnittstelle und die Netzwerkschnittstelle können auch in einer Einheit integriert sein, z.B. in Form einer Netzwerkschnittstelle mit einer entsprechenden Parsing-Funktion.

Es ist eine Ausgestaltung, dass das mindestens eine Funktionselement mindestens ein Wirkmittel zum Einwirken auf ein in dem Haushaltsgerät angeordnetes Gut umfasst. Das Wirkmittel kann für Wäschepflegegeräte z.B. ein Heizelement sein, beispielsweise eine Laugenheizung, eine Prozessluftheizung oder ein Antriebsmotor einer drehbaren Wäschetrommel. Das Wirkmittel kann für Gargeräte z.B. mindestens ein elektrisches Heizelement, ein Gasbrenner, ein Gebläse, ein Dampferzeuger, ein Magnetron usw. sein. Das Wirkmittel kann für Kältegeräte z.B. eine Wärmepumpe sein.

Es ist noch eine Ausgestaltung, dass das Haushaltsgerät mindestens einen Sensor aufweist, dessen Messwerte über die Netzwerkschnittstelle übertragbar sind. Dadurch können die Messwerte vorteilhafterweise direkt über ein Netzwerk an eine hausexterne Institution oder Datenverarbeitungseinrichtung übertragen werden. Dies wiederum ermöglicht eine Anpassung des auf das Haushaltsgerät übertragenen Codes, z.B. als eine Reaktion darauf, dass ein Messwert einen bestimmten Wert erreicht, überschritten oder unterschritten hat. Der mindestens eine Sensor kann beispielsweise ein Durchflusssensor, ein Temperatursensor, ein Drucksensor, ein Drehzahlsensor, eine Uhr usw. sein. Die Messwerte können in einer Weiterbildung über das Netzwerk ausgelesen werden.

Es ist noch eine Ausgestaltung, dass das Haushaltsgerät zum eigenständigen Durchführen von Sicherheitsüberprüfungen ausgebildet ist. So kann ein besonders hoher Sicherheitsstandard eingehalten werden, da Fehler, Störungen und Schäden lokal durch das Haushaltsgerät erkannt werden und zwar unabhängig davon, ob eine Netzwerkverbindung gestört ist oder nicht. Jedoch ist es zusätzlich oder alternativ auch möglich, Sicherheitsüberprüfungen extern über das Netzwerk durchführen zu lassen.

Es ist noch eine Ausgestaltung, dass das Haushaltsgerät zum eigenständigen Durchführen einer Nutzerkommunikation ausgebildet ist. Dazu kann das Haushaltsgerät eine Nutzerschnittstelle (z.B. umfassend mindestens ein Betätigungselement wie eine Taste, einen Drehknebel usw., und/oder mindestens ein Anzeigeelement wie eine Segmentanzeige, ein LCD-Display usw. und/oder einen Touchscreen usw.) aufweisen. Das Haushaltsgerät kann also selbstständig die Nutzerschnittstelle betreiben. Betätigungen der Nutzerschnittstelle können durch die Umsetzungsschnittstelle über das Netzwerk übertragen werden, z.B. eine Information über eine Betätigung einer Taste, über eine gewählte Drehstellung usw. Diese Information kann dazu verwendet werden, den auf das Haushaltsgerät übertragenen Code anzupassen.

Jedoch ist es grundsätzlich auch möglich, Nutzerkommunikation über das Netzwerk durchzuführen. Dies kann in einer Weiterbildung durch eine direkte Kommunikation zwischen einer in das Haushaltsgerät integrierten Nutzerschnittstelle und einer den Code ausgebenden Institution oder Datenverarbeitungseinrichtung geschehen. In einer zusätzlichen oder alternativen Weiterbildung ist die Nutzerschnittstelle ein von dem Haushaltsgerät separates Gerät, z.B. ein Tablet, Smartphone, Laptop usw., das zur Nutzerkommunikation entsprechend eingerichtet ist, z.B. über eine Applikationssoftware. In diesem Fall kann die Nutzerkommunikation über das Netzwerk direkt zwischen der Datenverarbeitungseinrichtung und der Nutzerschnittstelle erfolgen, d.h., unter Umgehung des Haushaltsgeräts. Für den Fall einer separaten Nutzerschnittstelle kann diese ggf. auch direkt mit dem Haushaltsgerät kommunizieren, z.B. über ein Heim-Netzwerk oder einen direkten (drahtlosen oder drahtgebundenen) Kommunikationskanal.

Es ist also eine Weiterbildung, dass das Haushaltsgerät dazu eingerichtet ist, dass es "nur" noch das mindestens eine Funktionselement betätigen kann, den mindestens einen Sensor auslesen kann und ggf. eine Nutzerschnittstelle betreiben kann. Die funktionale "Intelligenz" des Haushaltsgeräts in Bezug auf die Durchführung der Betriebsprogramme usw. ist dann in eine über das Netzwerk verbundene Institution ausgelagert. Das Haushaltsgerät kann zur Ausführung seiner verbliebenen Funktionalität eine entsprechend eingerichtete - z.B. programmierte oder verdrahtete - Schaltung aufweisen. Diese Schaltung kann in Form eines Moduls oder mehrerer - insbesondere miteinander verbundener - Module vorliegen.

Für den Fall, dass das Haushaltsgerät mehrere Module aufweist, kann das Haushaltsgerät dazu eingerichtet sein, die Datenkommunikation zwischen seinen Modulen selbst durchzuführen.

Es ist eine Weiterbildung, dass eine externe Datenverarbeitungseinrichtung mit nur einem (z.B. Zentral- oder Master-) Modul kommuniziert und dieses Master-Modul die durch den empfangenen Code anfallenden Aufgaben auf die anderen (z.B. peripheren oder Slave-) Module verteilt. In einer Variante weist nur das Master-Modul die Umsetzungsschnittstelle auf.

Die Umsetzungsschnittstelle kann in ein Modul (z.B. in ein Master-Modul) oder - falls vorhanden - in mehrere Module integriert sein, beispielsweise mittels einer entsprechenden Programmierung. Auch kann z.B. jedes der Module eine für die davon angesteuerten Funktionselemente oder Komponenten geeignete Hardwareabstraktionsschicht aufweisen.

Es ist noch eine Weiterbildung, dass die externe Datenverarbeitungseinrichtung über die Netzwerkschnittstelle mit mehreren, insbesondere allen, Modulen direkt kommunizieren kann. Dabei können insbesondere alle Module eine Umsetzungsschnittstelle aufweisen.

Ein Modul kann ein Nutzerschnittstellenmodul sein, das z.B. eine Mensch-Maschine-Schnittstelle bereitstellt und die Nutzerschnittstelle umfasst oder ansteuert.

Ein Modul kann ein "Hardware"-Modul sein, das weitere Funktionselemente steuert, z.B. Heizelemente, Ventil(e), Pumpe(n), eine Dosiereinheit usw.

Ein Modul kann eine sog. Motoreinheit sein, welche einen oder mehrere Motoren steuert, z.B. einen Antriebsmotor für eine Wäschetrommel, Wrasenlüfter usw. Beispielsweise kann die Motoreinheit eines Wäschepflegegeräts Instruktionen empfangen, um einen Reversier-Rhythmus, eine Trommeldrehzahl usw. einzustellen. Dieses Modul kann die Aufgabe haben, die Motorsteuerung direkt hardwarenah zu implementieren.

Es ist eine Weiterbildung, dass jedes der Module zum Datenaustausch mit anderen Modulen des Haushaltsgeräts ausgebildet ist, z.B. zur Kommunikation über einen geräteinternen Datenbus, beispielsweise einen Feldbus, z.B. einen CAN-Bus.

Diese Module können auch miteinander integriert sein, z.B. das Hardwaremodul und die Motoreinheit in ein einziges Modul.

Es ist eine Weiterbildung, dass jedes der Module dazu eingerichtet ist, eine Sicherheitsüberprüfung der von diesem Modul gesteuerten Funktionselemente durchzuführen.

Der von der Umsetzungsschnittstelle empfangene Code kann verschiedene Formen annehmen oder Funktionen aufweisen: Beispielsweise kann mittels des Codes ein Modul angewiesen werden, einen schrittweisen Prozess oder Task durchzuführen, bis eine bestimmte Variable einen vorgegeben Wert erreicht. Auch kann mittels des Codes ein Modul angewiesen werden, einen schrittweisen Prozess oder Task für eine vorgegebene Zeitdauer auszuführen. Auch kann mittels des Codes ein Modul angewiesen werden, einen Prozess oder Task abzubrechen. Auch können mittels des Codes mehrere Module angewiesen werden, einen Prozess oder Task parallel auszuführen.

Der Code kann in Form von Task Messages vorliegen, die von den Modulen in Instruktionen (z.B. Maschinencode oder Steuersignale) für die betroffenen Funktionselemente umgesetzt werden. Die Task Messages können Single-Task Messages sein. Die Verwendung von Task Messages weist den Vorteil auf, dass der gleiche Code für Funktionselemente unterschiedlicher Versionen o.ä. verwendet werden kann, da die Umsetzungsschnittstelle (z.B. eines damit gekoppelten Moduls) zur Umsetzung auf die entsprechenden Instruktionen abgestimmt ist. Die wiederum spart Aufwand bei der Bereitstellung des Codes.

Die Aufgabe wird auch gelöst durch eine nicht beanspruchte Datenverarbeitungseinrichtung, aufweisend einen Speicher zum persistenten Speichern eines Codes zum Ablaufen(lassen) mindestens eines Betriebsprogramms eines Haushaltsgeräts, wobei die Datenverarbeitungseinrichtung dazu eingerichtet ist, ein über das Netzwerk verbundenes Haushaltsgerät zu identifizieren und an dieses Haushaltsgerät zumindest einen Teil des Codes zum direkten, sequentiellen Ablaufenlassen eines vollständigen Betriebsprogramms zu übermitteln.

Diese Datenverarbeitungseinrichtung weist den Vorteil auf, dass sie das vergleichsweise rudimentär ausgestattete Haushaltsgerät wie oben beschrieben mit einer vollen Funktionalität betreiben kann. Die Intelligenz der Betriebsabläufe (z.B. Wasch-, Trocknungs- oder Garprogramme) befindet sich in der Datenverarbeitungseinrichtung. Das Haushaltsgerät kann dann darauf beschränkt bleiben, Funktionselemente zu betätigen bzw. anzusteuern und ggf. Sensoren auszulesen und/oder mit einem Nutzer zu kommunizieren.

Auch ergibt sich der Vorteil, dass die externe Datenverarbeitungseinrichtung eine weit höhere Datenverarbeitungsleistung bereitstellen kann als ein Haushaltsgerät und deshalb eine genauere Datenanalyse auf der Grundlage von Daten, die von dem Haushaltsgerät an die Datenverarbeitungseinrichtung übermittelt werden (z.B. Zustandsinformation), ermöglicht. Diese Daten können beispielsweise zur sog. "Pre"-Analyse und/oder "Post"-Analyse eines Betriebsablaufs herangezogen werden. Dies ermöglicht beispielsweise eine Erkennung von Schwachstellen eines Haushaltsgeräts, z.B. einer schwachen Pumpe. Die Datenverarbeitungseinrichtung kann dann dazu eingerichtet sein, den Code so anzupassen, dass diese Schwachstelle(n) ausgeräumt werden, z.B. durch eine Erhöhung einer Drehzahl eines Pumpenmotors. Auch kann der Code dahingehend angepasst werden, dass mindestens ein Funktionselement des Haushaltsgeräts geringer belastet wird, so dass beispielsweise eine längere Lebensdauer erreichbar ist.

Diese Code-Anpassung kann spezifisch für ein bestimmtes Haushaltsgerät oder für eine ganze Serie von Haushaltsgeräten durchgeführt werden. Die Daten können für mehrere Haushaltsgeräte gemeinsam ausgewertet werden.

Noch ein Vorteil besteht darin, dass Programmfehler und/oder Programmverbesserungen für alle Geräte besonders schnell und ohne Herunterladen von Software auf die Haushaltsgeräte beseitigt bzw. implementiert werden können.

Außerdem ergibt sich so der Vorteil, dass mittels der Datenverarbeitungseinrichtung besonders einfach das Haushaltsgerät betreffende Umgebungsinformation wie eine Raumtemperatur, Energiepreise, Verfügbarkeit usw. beschaffbar sind und genutzt werden können, um den Code eines Haushaltsgeräts anzupassen. Dies kann insbesondere vorteilhaft sein, wenn ein Standort mehrerer Haushaltsgeräte bekannt ist und Umgebungsinformationen für ganze Regionen gleich oder sehr ähnlich sind, z.B. Energiepreise. Dann kann eine einfache Anpassung des Codes an der Datenverarbeitungseinrichtung an die Umgebungsinformation für alle Haushaltsgeräte in besagter Region gelten. Dies ist erheblich einfacher, als alle betroffenen Haushaltsgeräte zu updaten.

Zudem kann über die Datenverarbeitungseinrichtung anstelle einer Kommunikation von Haushaltsgerät zu Haushaltsgerät eine Kommunikation zwischen entsprechenden Applikationen auf der Datenverarbeitungseinrichtung durchgeführt werden. Dies kann umfassen, dass die Datenverarbeitungseinrichtung dazu eingerichtet ist, zu erkennen, ob sich zwei oder mehr Haushaltsgeräte am gleichen Ort befinden. Beispielsweise können diese Haushaltsgeräte abhängig von einer Information aktiviert werden, die von einem anderen Haushaltsgerät übermittelt worden ist.

Das direkte, sequentielle Ablaufenlassen des vollständigen Betriebsprogramms umfasst, dass der Code mehrere Befehle (z.B. Task Messages) sequentiell an das Haushaltsgerät übertragen kann, wobei die Befehle in ihrer Gesamtheit einen vollständigen Betriebsablauf umfassen, insbesondere einen vollständigen Ablauf eines Betriebsprogramms. Das Betriebsprogramm kann beispielsweise ein bestimmtes Waschprogramm (z.B. "40°C Feinwäsche", "Eco", "Outdoor" usw.), ein Trocknungsprogramm (z.B. "Bügelfeucht" oder "Schranktrocken"), ein Garprogramm (z.B. "Sanftgaren", 200°C Grillen" usw.) usw. sein.

Die Datenverarbeitungseinrichtung kann ein Server oder ein Serververbund sein. Die Datenverarbeitungseinrichtung kann eine verteilte Datenverarbeitungseinrichtung (beispielsweise die "Cloud") sein. Das Netzwerk kann das Internet sein.

Die Datenverarbeitungseinrichtung kann mit mehreren Haushaltsgeräten über das Netzwerk verbunden werden oder sein, um diesen einen auf sie abgestimmten Code zu übermitteln. Die Haushaltsgeräte können unterschiedliche Haushaltsgeräte sein, z.B. Haushaltsgeräte unterschiedlicher Versionen, Haushaltsgeräte unterschiedlicher Bauart oder Haushaltsgeräte unterschiedlicher Art. Die Datenverarbeitungseinrichtung kann mit mehreren Haushaltsgeräten gleichzeitig zu deren Ansteuerung über das Netzwerk verbunden werden oder sein. Ein Haushaltsgerät kann zu seiner Ansteuerung mit einer oder mit mehreren Datenverarbeitungseinrichtung verbunden werden oder sein.

Die Datenverarbeitungseinrichtung kann insbesondere einen Interpreter umfassen, der Quellcode oder Zwischencode einliest, analysiert und in den an das Haushaltsgerät zu übermittelnden Code übersetzt.

Es ist eine Ausgestaltung, dass das Identifizieren des Haushaltsgeräts ein Identifizieren einer dem Haushaltsgerät zugeordneten Region und/oder eines dem Haushaltsgerät zugeordneten Energielabels umfasst. Dadurch kann der Code vorteilhafterweise noch individueller auf das identifizierte Haushaltsgerät abgestimmt werden. Das Identifizieren der dem Haushaltsgerät zugeordneten Region kann ein Identifizieren einer für das Haushaltsgerät vorgesehenen Region und/oder ein Identifizieren eines aktuellen Standorts des aufgestellten Haushaltsgeräts umfassen. Eine Region kann ein bestimmtes Land, einen bestimmten Wirtschaftsraum (z.B. EU, Nordamerika) und/oder ein Gebiet mit gleichen oder ähnlichen Randbedingungen (Normen, Standards usw.) sein.

Es ist noch eine Ausgestaltung, dass die Datenverarbeitungseinrichtung dazu eingerichtet ist, Zustandsdaten von dem Haushaltsgerät zu empfangen. Dies ermöglicht auf besonders einfache Weise eine zustandsabhängige externe Ansteuerung des Haushaltsgeräts durch die Datenverarbeitungseinrichtung, z.B. durch eine Anpassung des zugehörigen Codes. Die Zustandsdaten können von dem Haushaltsgerät ermittelte Messwerte mindestens eines Sensors (z.B. betreffend eine Temperatur, eine Feuchtigkeit usw.) und/oder Zustandswerte des mindestens einen Funktionselements (z.B. ein angelegter Betriebsstrom, eine Drehzahl, ein Ein- oder Aus-Zustand usw.) sein. Die Datenverarbeitungseinrichtung kann also allgemein dazu eingerichtet sein, auf Grundlage der Zustandsdaten den Code für das Haushaltsgerät und/oder dessen Übermittlung an das Haushaltsgerät anzupassen.

Es ist noch eine Ausgestaltung, dass die Datenverarbeitungseinrichtung dazu eingerichtet ist, auf Grundlage der Zustandsdaten eine Fehleranalyse durchzuführen. Dies ermöglicht eine noch höhere Betriebssicherheit. Dabei wird ausgenutzt, dass eine externe Datenverarbeitungseinrichtung eine weit höhere Datenverarbeitungsleistung und deshalb eine genauere Datenanalyse ermöglicht als das Haushaltsgerät. Die Zustandsinformation kann grundsätzlich zur sog. "Pre"-Analyse und/oder "Post"-Analyse eines Betriebsablaufs herangezogen werden.

Es ist noch eine Ausgestaltung, dass die Datenverarbeitungseinrichtung dazu eingerichtet ist, eine Nutzerkommunikation für dieses Haushaltsgerät durchzuführen, ggf. über ein entsprechendes Modul mit einer passenden Umsetzungsschnittstelle. Dies ermöglicht einen noch einfacheren Aufbau des Haushaltsgeräts. Die Nutzerkommunikation kann mit einer in das Haushaltsgerät integrierten Nutzerschnittstelle und/oder mit direkt einer von dem Haushaltsgerät getrennten Nutzerschnittstelle (z.B. einem entsprechend eingerichteten, insbesondere programmierten Smartphone, Tablet, Laptop, Desktop usw.) durchgeführt werden.

Das Durchführen der Nutzerkommunikation für eine in das Haushaltsgerät integrierte Nutzerschnittstelle, z.B. eine Bedienblende mit zugehörigem Steuermodul, kann in einer Weiterbildung so umgesetzt sein, dass die ausführbaren Instruktionen die Nutzerschnittstelle anweisen, Elemente der Nutzerschnittstelle zu aktivieren oder deaktivieren, daran Anzeigen abzubilden usw. Elemente der Nutzerschnittstelle können beispielsweise Anzeigeeinheiten, Summer, Leuchten, Tasten, Schalter, Drehknebel, Schieber usw. umfassen. Betätigungen der Nutzerschnittstelle können zunächst durch diese selbst bzw. durch deren Nutzerschnittstellenmodul ausgewertet werden (z.B. ob eine bestimmte Taste betätigt worden ist), und Ergebnisse der Auswertung über die (ggf. in das Nutzerschnittstellenmodul integrierte) Umsetzungsschnittstelle und die Netzwerkschnittstelle an die Datenverarbeitungseinrichtung übermittelt werden. Dies bedeutet, dass eine bestimmte "Intelligenz" zur Ansteuerung und Auswertung der Nutzerschnittstelle im Haushaltsgerät verbleibt. In einer anderen Weiterbildung können mittels der ausführbaren Instruktionen die Elemente der Nutzerschnittstelle direkt angesteuert werden und/oder Betätigungen der Nutzerschnittstelle direkt über die Umsetzungsschnittstelle auf die Datenverarbeitungseinrichtung übertragen werden usw.

Die Aufgabe wird zudem gelöst durch ein System, aufweisend mindestens ein Haushaltsgerät wie oben beschrieben und mindestens eine Datenverarbeitungseinrichtung wie oben beschrieben. Das System kann analog zu dem Haushaltsgerät und zu der Datenverarbeitungseinrichtung weitergebildet sein und ergibt die gleichen Vorteile.

Die Aufgabe wird außerdem gelöst durch ein Verfahren zum Betreiben eines Haushaltsgeräts mit mindestens folgenden Schritten: Identifizieren eines Haushaltsgeräts durch eine Datenverarbeitungseinrichtung über ein Netzwerk; (Sequentielles) Übertragen von auf das Haushaltsgerät abgestimmtem Code zum Ablaufenlassen eines vollständigen Betriebsprogramms von der Datenverarbeitungseinrichtung auf eine Umsetzungsschnittstelle des Haushaltsgerät; und direktes Betreiben des Haushaltsgeräts beruhend auf dem an die Umsetzungsschnittstelle übertragenen Code.

Das Verfahren kann analog zu dem oben beschriebenen Haushaltsgerät, der oben beschriebenen Datenverarbeitungseinrichtung und/oder dem oben beschriebenen System ausgebildet werden und ergibt die gleichen Vorteile.

So ist es eine Ausgestaltung, dass die Umsetzungsschnittstelle mit mindestens einem Funktionselement des Haushaltsgeräts verbunden ist.

Auch ist es eine Ausgestaltung, dass das direkte Betreiben des Haushaltsgeräts ein direktes Ansteuern zumindest eines Wirkmittels des Haushaltsgeräts umfasst. Dies umfasst insbesondere, dass der von der Umsetzungsschnittstelle empfangene Code nicht persistent in dem Haushaltsgerät gespeichert wird.

Zudem ist es eine Ausgestaltung, dass die Umsetzungsschnittstelle mit mindestens einem Sensor des Haushaltsgeräts verbunden ist und Messdaten des mindestens einen Sensors über die Umsetzungsschnittstelle und das Netzwerk an die Datenverarbeitungseinrichtung übertragen werden.

Dem Übertragen des Codes von der Datenverarbeitungseinrichtung auf das Haushaltsgerät kann z.B. durch ein Übertragen einer Information über ein Betätigen eines Betätigungselements des Haushaltsgeräts auf die Datenverarbeitungseinrichtung gestartet werden, alternativ bereits durch das Identifizieren des Haushaltsgeräts, ggf. folgend auf ein Anschalten des Haushaltsgeräts hin.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit der folgenden Zeichnung näher erläutert wird.

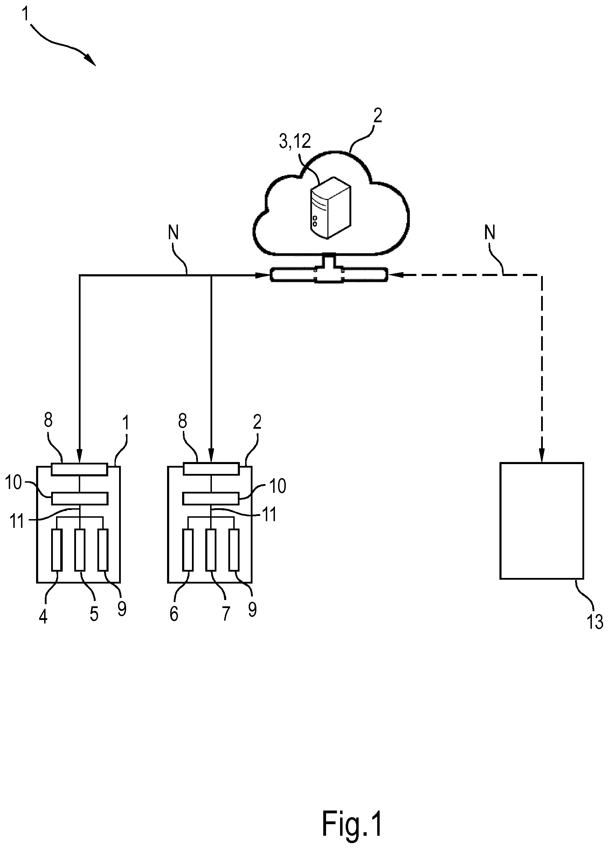

- Fig.1: zeigt eine Skizze eines Systems mit einem ersten Haushaltsgerät in Form einer Waschmaschine 1 und mit einem zweiten Haushaltsgerät in Form eines Wäschetrockners 2, die mit einer hausexternen Datenverarbeitungseinrichtung - hier z.B. als ein Server 3 angedeutet - über das Internet verbunden sind.

Die Waschmaschine 1 weist mindestens ein elektrisch ansteuerbares Funktionselement, z.B. eine Laugenheizung 4, und mindestens einen Sensor, z.B. einen Laugentemperatursensor 5, auf. Der Wäschetrockner 2 weist ebenfalls mindestens ein elektrisch ansteuerbares Funktionselement, z.B. eine Prozessluftheizung 6, und mindestens einen Sensor, z.B. einen Feuchtigkeitssensor 7, auf. Beide Haushaltsgeräte 1, 2 weisen jeweils eine Netzwerkschnittstelle 8 zum Übertragen von Daten über ein Netzwerk N in Form z.B. des Internets auf, z.B. eine Ethernet-Schnittstelle, eine WLAN-Schnittstelle usw. Beide Haushaltsgeräte 1, 2 weisen als weitere Funktionselemente jeweils eine Nutzerschnittstelle 9 auf.

Die Netzwerkschnittstelle 8 ist jeweils mit einer - z.B. in ein Modul (o. Abb.) integrierten - Umsetzungsschnittstelle 10 verbunden. Die Umsetzungsschnittstelle 10 ist mit den Funktionselementen 4, 6, 9 zu deren Steuerung und mit den Sensoren 5, 7 zu deren Messwerterfassung verbunden. Die Komponenten 4, 5, 8, 9 und 10 bzw. 6 bis 10 sind über einen internen Datenbus 11 miteinander verbunden, z.B. einen CAN-Bus oder einen D-Bus. Die Umsetzungsschnittstelle 10 kann als Hardwareabstraktionsschicht zu den Funktionselementen 4, 6, 9 und Sensoren 5, 7 dienen. Alternativ können die Haushaltsgeräte 1, 2 die Nutzerschnittstellen 9 selbsttätig ansteuern.

Beide Haushaltsgeräte 1, 2 können zum eigenständigen Durchführen von Sicherheitsüberprüfungen ihrer Funktionselemente und Sensoren 4, 5 und 9 bzw. 6, 7 und 9 und/oder zur Nutzerkommunikation über die Nutzerschnittstelle 9 ausgebildet sein.

Die Datenverarbeitungseinrichtung 3 kann einen Speicher 12 zum Speichern eines Codes zum Ablaufenlassen mindestens eines Betriebsprogramms jedes der beiden Haushaltsgeräte 1, 2 aufweisen bzw. mit einem solchen Speicher 12 verbunden sein.

Die Datenverarbeitungseinrichtung 3 ist dazu eingerichtet, ein über das Netzwerk N verbundenes Haushaltsgerät 1, 2 zu identifizieren und an dieses Haushaltsgerät 1, 2 Code zum direkten, sequentiellen Ablaufenlassen eines vollständigen Betriebsprogramms zu übermitteln, insbesondere im Sinne eines Cloud Computings. Zum Identifizieren können die Haushaltsgeräte 1, 2 jeweilige individuelle oder seriengleiche Kennungen aufweisen. Das Identifizieren kann ferner ein Identifizieren einer den Haushaltsgeräten 1, 2 zugeordneten Region und/oder eines den Haushaltsgeräten 1, 2 zugeordneten Energielabels umfassen. Der Code kann z.B. Task Messages aufweisen, die von der Umsetzungsschnittstelle 10 in Maschinencode und/oder elektrische Ansteuerungssignale für die Funktionselemente und Sensoren 4, 5 und 9 bzw. 6, 7 und 9 umgesetzt werden.

Die Datenverarbeitungseinrichtung 3 ist außerdem dazu eingerichtet, Daten von den Haushaltsgeräten 1, 2 zu empfangen, beispielsweise Rückmeldungen, Zustandsdaten, Messdaten usw. Sie kann auf Grundlage der empfangenen Daten, insbesondere Zustandsdaten, den Code für das Haushaltsgerät 1, 2 und/oder dessen Übermittlung an das Haushaltsgerät 1, 2 anpassen. Die Datenverarbeitungseinrichtung 3 kann z.B. auf Grundlage der Zustandsdaten eine Fehleranalyse durchzuführen.

Zusätzlich oder alternativ zur Verwendung der Nutzerschnittstellen 9 zur Kommunikation mit einem Nutzer kann die Datenverarbeitungseinrichtung 3 mit einer externen Nutzerschnittstelle 13 verbunden sein, z.B. mit einem Tablet, Smartphone usw. Die Datenverarbeitungseinrichtung 3 kann dann dazu eingerichtet sein, eine Nutzerkommunikation für diese Haushaltsgeräte 1, 2 direkt über die externe Nutzerschnittstelle 13 durchzuführen, d.h., unter Umgehung der Haushaltsgeräte 1, 2.

Die Haushaltsgeräte 1, 2 können so betrieben werden, dass nach einer datentechnischen Verbindung der Haushaltsgeräte 1, 2 diese durch die Datenverarbeitungseinrichtung 3 über das Netzwerk N identifiziert werden, z.B. durch Auslesen ihrer Kennung. Auf eine durch die Datenverarbeitungseinrichtung 3 erkannte Aktivierung eines Betriebsprogramms zumindest eines der Haushaltsgeräte 1, 2 hin überträgt die Datenverarbeitungseinrichtung 3 auf das aktivierte Haushaltsgerät 1, 2 abgestimmtem Code über das Netzwerk N zu der Netzwerkschnittstelle 8 des aktivierten Haushaltsgeräts 1, 2. Der Code wird von der Umsetzungsschnittstelle 10 so in ausführbare Instruktionen umgewandelt, dass die Funktionselemente 4 und ggf. 9 bzw. 6 und ggf. 9 entsprechend angesteuert werden ("direktes Betreiben"). Eine persistente Speicherung des Übertragenen Codes findet nicht statt. Die Sensoren 5, 7 melden Messdaten an die Datenverarbeitungseinrichtung 3 zurück.

Der übertragene Code dient dazu, ein vollständiges Betriebsprogramm auf dem aktivierten Haushaltsgeräts 1, 2 ablaufen zu lassen, und als direktes Betreiben des Haushaltsgeräts beruhend auf dem an die Umsetzungsschnittstelle übertragenen Code im Sinne eines Cloud Computings.

Die Datenverarbeitungseinrichtung 3 kann einen Compiler und/oder Interpreter aufweisen, um Quellcode und/oder Zwischencode in den Code umzuwandeln.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Waschmaschine
- 2: Wäschetrockner
- 3: Server
- 4: Laugenheizung
- 5: Laugentemperatursensor
- 6: Prozessluftheizung
- 7: Feuchtigkeitssensor
- 8: Netzwerkschnittstelle
- 9: Nutzerschnittstelle
- 10: Umsetzungsschnittstelle
- 11: Datenbus
- 12: Speicher
- 13: Externe Nutzerschnittstelle
- N: Netzwerk

## Patentansprüche

1. Haushaltsgerät (1, 2), aufweisend
- mindestens ein elektrisch ansteuerbares Funktionselement (4, 6, 9), umfassend mindestens ein Wirkmittel (4, 6) zum Einwirken auf ein in dem Haushaltsgerät (1, 2) angeordnetes Gut,
- mindestens eine Netzwerkschnittstelle (8) zum Übertragen von Daten über ein Netzwerk (N) und
- eine Umsetzungsschnittstelle (10) zwischen dem mindestens einen Funktionselement (4, 6, 9) und der Netzwerkschnittstelle (8) zum Umsetzen von Anweisungen, die sich in einem über die Netzwerkschnittstelle (8) empfangenem Code befinden, in direkt ausführbare Instruktionen für mindestens eines der mindestens einen Wirkmittel (4, 6),
- wobei das Haushaltsgerät (1, 2) dazu eingerichtet ist, die Anweisungen während einer Durchführung eines Betriebsprogramms, zu dessen Ablaufenlassen der empfangende Code nicht erst persistent in dem Haushaltsgerät zu speichern ist, in die Instruktionen umzusetzen und mindestens eines der mindestens einen Wirkmittel (4, 6) des Haushaltsgeräts (1, 2) beruhend auf den umgesetzten Instruktionen direkt anzusteuern.

2. Haushaltsgerät (1, 2) nach Anspruch 1, wobei das Haushaltsgerät (1, 2) mindestens einen Sensor (5, 7) aufweist, dessen Messwerte über die Netzwerkschnittstelle (10) übertragbar sind.

3. Haushaltsgerät (1, 2) nach einem der vorhergehenden Ansprüche, wobei das Haushaltsgerät (1, 2) keinen Speicher zum persistenten Speichern des empfangenen Codes aufweist.

4. Haushaltsgerät (1, 2) nach einem der vorhergehenden Ansprüche, wobei das Haushaltsgerät (1, 2) zum eigenständigen Durchführen von Sicherheitsüberprüfungen und/oder zur Nutzerkommunikation ausgebildet ist.

5. System (1, 2, 3), aufweisend mindestens ein Haushaltsgerät (1, 2) nach einem der vorhergehenden Ansprüche und mindestens eine Datenverarbeitungseinrichtung (3), aufweisend
- einen Speicher (12) zum persistenten Speichern eines Codes mit einer Sequenz von Anweisungen zum Ablaufenlassen mindestens eines Betriebsprogramms mindestens eines Haushaltsgeräts (1, 2) nach einem der vorhergehenden Ansprüche,
- wobei die Datenverarbeitungseinrichtung (3) dazu eingerichtet ist, ein solches über das Netzwerk (N) verbundenes Haushaltsgerät (1, 2) zu identifizieren und an dieses Haushaltsgerät (1, 2) den Code zu übermitteln, dessen Sequenz von Anweisungen zum direkten, sequentiellen Ablaufenlassen eines vollständigen Betriebsprogramms durch das Haushaltsgeräts (1, 2) in Instruktionen umsetzbar sind, die von mindestens einem der mindestens einen Wirkmittel (4, 6) dieses Haushaltsgeräts (1, 2) zum Einwirken auf ein in diesem Haushaltsgerät (1, 2) angeordnetes Gut direkt ausführbar sind.

6. System (1, 2, 3) nach Anspruch 5, wobei das Identifizieren des Haushaltsgeräts (1, 29 ein Identifizieren einer dem Haushaltsgerät (1, 2) zugeordneten Region und/oder eines dem Haushaltsgerät (1, 2) zugeordneten Energielabels umfasst.

7. System (1, 2, 3) nach einem der Ansprüche 5 bis 6, wobei die Datenverarbeitungseinrichtung (3) dazu eingerichtet ist, Zustandsdaten von dem Haushaltsgerät (1, 2) zu empfangen.

8. System (1, 2, 3) nach Anspruch 7, wobei die Datenverarbeitungseinrichtung (3) dazu eingerichtet ist, auf Grundlage der Zustandsdaten den Code für das Haushaltsgerät (1, 2) und/oder dessen Übermittlung an das Haushaltsgerät (1, 2) anzupassen.

9. System (1, 2, 3) nach einem der Ansprüche 7 bis 8, wobei die Datenverarbeitungseinrichtung (3) dazu eingerichtet ist, auf Grundlage der Zustandsdaten eine Fehleranalyse durchzuführen.

10. System (1, 2, 3) nach einem der Ansprüche 5 bis 9, wobei die Datenverarbeitungseinrichtung (3) dazu eingerichtet ist, eine Nutzerkommunikation für dieses Haushaltsgerät (1, 2) durchzuführen.

11. System (1, 2, 3) nach einem der Ansprüche 5 bis 10, wobei die in dem Code vorhandenen Anweisungen in ihrer Gesamtheit einen vollständigen Ablauf eines Betriebsprogramms umfassen.

12. Verfahren zum Betreiben eines Haushaltsgeräts (1, 2) mit mindestens folgenden Schritten:
- Identifizieren eines Haushaltsgeräts (1, 2) durch eine Datenverarbeitungseinrichtung (3) über ein Netzwerk (N),
- Übertragen von auf das Haushaltsgerät (1, 2) abgestimmtem Code mit einer Sequenz von Anweisungen zum Ablaufenlassen eines vollständigen Betriebsprogramms von der Datenverarbeitungseinrichtung (3) auf eine Umsetzungsschnittstelle (10) des Haushaltsgerät (1, 2),
- Umsetzen der Sequenz von Anweisungen mittels der Umsetzungsschnittstelle (10) in eine Sequenz von Instruktionen und
- direktes Ansteuern mindestens eines Wirkmittels (4, 6) des Haushaltsgeräts (1, 2) beruhend auf der Sequenz von Instruktionen.

13. Verfahren nach Anspruch 12, wobei
- die Umsetzungsschnittstelle (10) mit mindestens einem der mindestens einen Wirkmittel (4, 6) des Haushaltsgeräts (1, 2) verbunden ist und
- das direkte Betreiben des Haushaltsgeräts (1, 2) ein direktes Ansteuern zumindest eines der mindestens einen Wirkmittel (4, 6) des Haushaltsgeräts (1, 2) umfasst.

14. Verfahren nach einem der Ansprüche 12 bis 13, wobei
- die Umsetzungsschnittstelle (10) mit mindestens einem Sensor (5, 7) des Haushaltsgeräts (1, 2) verbunden ist und
- Messdaten des mindestens einen Sensors (5, 7) über die Umsetzungsschnittstelle (10) und das Netzwerk (N) an die Datenverarbeitungseinrichtung (3) übertragen werden.

## Claims

1. Household appliance (1, 2), having
- at least one electrically actuatable function element (4, 6, 9), comprising at least one active means (4, 6) for acting on an item arranged in the household appliance (1, 2),
- at least one network interface (8) for transferring data via a network (N) and
- a conversion interface (10) between the at least one function element (4, 6, 9) and the network interface (8) for converting directions that are located in a code received via the network interface (8) into directly executable instructions for at least one of the at least one active means (4, 6),
- wherein the household appliance (1, 2) is configured to convert the directions into the instructions while an operating program is being performed, for which the received code does not first have to be stored in a persistent manner in the household appliance in order to be able to run, and to actuate at least one of the at least one active means (4, 6) of the household appliance (1, 2) directly based on the converted instructions.

2. Household appliance (1, 2) according to claim 1, wherein the household appliance (1, 2) has at least one sensor (5, 7), of which the measurement values can be transferred via the network interface (10).

3. Household appliance (1, 2) according to one of the preceding claims, wherein the household appliance (1, 2) does not have memory for the persistent storage of the received code.

4. Household appliance (1, 2) according to one of the preceding claims, wherein the household appliance (1, 2) is embodied for the independent performance of safety checks and/or for user communication.

5. System (1, 2, 3), having at least one household appliance (1, 2) according to one of the preceding claims and at least one data processing facility (3), having
- a memory (12) for the persistent storage of a code with a sequence of directions for enabling at least one operating program of at least one household appliance (1, 2) according to one of the preceding claims to run,
- wherein the data processing facility (3) is configured to identify such a household appliance (1, 2) connected via the network (N) and to transmit to said household appliance (1, 2) the code, of which the sequence of directions for the direct, sequential enabling of a complete operating program to run can be converted into instructions by the household appliance (1, 2), which instructions can be carried out directly by at least one of the at least one active means (4, 6) of said household appliance (1, 2) in order to act on an item arranged in said household appliance (1, 2).

6. System (1, 2, 3) according to claim 5, wherein the identification of the household appliance (1, 29) comprises an identification of a region assigned to the household appliance (1, 2) and/or an energy label assigned to the household appliance (1, 2).

7. System (1, 2, 3) according to one of claims 5 to 6, wherein the data processing facility (3) is configured to receive status data from the household appliance (1, 2).

8. System (1, 2, 3) according to claim 7, wherein the data processing facility (3) is configured, on the basis of the status data, to adapt the code for the household appliance (1, 2) and/or the transmission thereof to the household appliance (1, 2).

9. System (1, 2, 3) according to one of claims 7 to 8, wherein the data processing facility (3) is configured, on the basis of the status data, to perform an error analysis.

10. System (1, 2, 3) according to one of claims 5 to 9, wherein the data processing facility (3) is configured to perform a user communication for said household appliance (1, 2).

11. System (1, 2, 3) according to one of claims 5 to 10, wherein the directions present in the code, in their entirety, comprise a complete running of an operating program.

12. Method for operating a household appliance (1, 2) with at least the following steps:
- identifying a household appliance (1, 2) by way of a data processing facility (3) via a network (N),
- transferring code aligned with the household appliance (1, 2), with a sequence of directions for enabling a complete operating program to be run by the data processing facility (3), to a conversion interface (10) of the household appliance (1, 2),
- converting the sequence of directions into a sequence of instructions by means of the conversion interface (10) and
- directly actuating at least one active means (4, 6) of the household appliance (1, 2) based on the sequence of instructions.

13. Method according to claim 12, wherein
- the conversion interface (10) is connected to at least one of the at least one active means (4, 6) of the household appliance (1, 2) and
- the direct operation of the household appliance (1, 2) comprises a direct actuation of at least one of the at least one active means (4, 6) of the household appliance (1, 2).

14. Method according to one of claims 12 to 13, wherein
- the conversion interface (10) is connected to at least one sensor (5, 7) of the household appliance (1, 2) and
- measurement data of the at least one sensor (5, 7) is transferred to the data processing facility (3) via the conversion interface (10) and the network (N).

## Revendications

1. Appareil électroménager (1, 2) comprenant
- au moins un élément fonctionnel (4, 6, 9) à contrôle électrique, comprenant au moins un moyen d'action (4, 6) pour opérer un effet sur une marchandise rangée dans l'appareil électroménager (1, 2),
- au moins une interface réseau (8) servant à la transmission de données via un réseau (N) et
- une interface de conversion (10) entre le au moins un élément fonctionnel (4, 6, 9) et l'interface réseau (8) pour la conversion de consignes se trouvant dans un code reçu via l'interface réseau (8), dans des instructions directement exécutables pour au moins un des au moins un moyens d'action (4, 6),
- l'appareil électroménager (1, 2) étant prévu pour convertir les consignes en instructions pendant l'exécution d'un programme de fonctionnement, pour le déroulement duquel le code reçu ne doit même pas demeurer de manière permanente dans l'appareil électroménager, et pour contrôler directement au moins l'un des au moins un moyens d'action (4, 6) de l'appareil électroménager (1, 2) en se basant sur les instructions converties.

2. Appareil électroménager (1, 2) selon la revendication 1, dans lequel l'appareil électroménager (1, 2) comprend au moins un détecteur (5, 7) dont les valeurs mesurées peuvent être transmises via l'interface réseau (10).

3. Appareil électroménager (1, 2) selon l'une des revendications précédentes, dans lequel l'appareil électroménager (1, 2) ne comprend aucune mémoire pour le stockage permanent du code reçu.

4. Appareil électroménager (1, 2) selon l'une des revendications précédentes, dans lequel l'appareil électroménager (1, 2) est réalisé pour l'exécution autonome de vérifications de sécurité et/ou pour la communication avec l'utilisateur.

5. Système (1, 2, 3) comprenant au moins un appareil électroménager (1, 2) selon l'une des revendications précédentes et au moins un dispositif de traitement de données (3), comprenant
- une mémoire (12) pour le stockage permanent d'un code consistant en une séquence de consignes pour le déroulement d'au moins un programme de fonctionnement d'au moins un appareil électroménager (1, 2) selon l'une des revendications précédentes,
- dans lequel le dispositif de traitement de données (3) est prévu pour identifier un appareil électroménager (1, 2) du type raccordé via le réseau (N) et pour transmettre à cet appareil électroménager (1, 2) le code dont la séquence de consignes consistant à se dérouler de manière directe et successive un programme de fonctionnement complet par l'appareil électroménager (1, 2), peut être convertie en instructions qui sont directement exécutables par au moins l'un des au moins un agents d'action (4, 6) de cet appareil électroménager (1, 2) en vue d'opérer un effet sur une marchandise rangée dans cet appareil électroménager (1, 2).

6. Système (1, 2, 3) selon la revendication 5, dans lequel l'identification de l'appareil électroménager (1, 2) comprend l'identification d'une région associée à l'appareil électroménager (1, 2) et/ou d'un label énergétique associé à l'appareil électroménager (1, 2).

7. Système (1, 2, 3) selon l'une des revendications 5 à 6, dans lequel le dispositif de traitement de données (3) est prévu pour recevoir les données d'état de la part de l'appareil électroménager (1, 2).

8. Système (1, 2, 3) selon la revendication 7, dans lequel le dispositif de traitement de données (3) est prévu pour adapter, sur base des données d'état, le code pour l'appareil électroménager (1, 2) et/ou sa transmission à l'appareil électroménager (1, 2).

9. Système (1, 2, 3) selon l'une des revendications 7 à 8, dans lequel le dispositif de traitement de données (3) est prévu pour exécuter, sur base des données d'état, une analyse des erreurs.

10. Système (1, 2, 3) selon l'une des revendications 5 à 9, dans lequel le dispositif de traitement de données (3) est prévu pour mettre en place une communication avec l'utilisateur pour cet appareil électroménager (1, 2).

11. Système (1, 2, 3) selon l'une des revendications 5 à 10, dans lequel les consignes présentes dans le code comprenant dans leur intégralité, le déroulement complet d'un programme de fonctionnement.

12. Procédé de fonctionnement d'un appareil électroménager (1, 2) comprenant au moins les étapes suivantes :
- identification d'un appareil électroménager (1, 2) par un dispositif de traitement de données (3) via un réseau (N),
- transmission d'un code convenu à l'appareil électroménager (1, 2) comprenant une séquence de consignes pour le déroulement d'un programme de fonctionnement complet de la part du dispositif de traitement de données (3) sur une interface de conversion (10) de l'appareil électroménager (1, 2),
- conversion de la séquence de consignes au moyen de l'interface de conversion (10) en une séquence d'instructions, et
- contrôle direct d'au moins un moyen d'action (4, 6) de l'appareil électroménager (1, 2) sur base de la séquence d'instructions.

13. Procédé selon la revendication 12, dans lequel
- l'interface de conversion (10) est raccordée à au moins l'un des au moins un moyens d'action (4, 6) de l'appareil électroménager (1, 2) et
- le fonctionnement direct de l'appareil électroménager (1, 2) comprend un contrôle direct d'au moins un des au moins un moyens d'action (4, 6) de l'appareil électroménager (1, 2).

14. Procédé selon l'une des revendications 12 à 13, dans lequel
- l'interface de conversion (10) est raccordée à au moins un détecteur (5, 7) de l'appareil électroménager (1, 2), et
- les données de mesure du au moins un détecteur (5, 7) sont transmises via l'interface de conversion (10) et le réseau (N) au dispositif de traitement de données (3).
